# EUROPEAN PATENT SPECIFICATION

(11) **EP 2 939 851 B1**
(45) Date of publication and mention of the grant of the patent: **16.05.2018**
(21) Application number: 13868789.2
(22) Date of filing: 10.12.2013
(51) Int. Cl.: B60C 7/18, B60B 9/04, B60C 7/00

(54) **NON-PNEUMATIC TYRE**
LUFTLOSER REIFEN
PNEU NON PNEUMATIQUE

(30) Priority: 26.12.2012 JP 2012282663
(43) Date of publication of application: 04.11.2015
(73) Proprietor: Bridgestone Corporation, Tokyo 104-8340 (JP)
(72) Inventor: FUDEMOTO Hiroyuki, Kodaira-shi Tokyo 187-8531 (JP); IZUMOTO Ryuji, Kodaira-shi Tokyo 187-8531 (JP); KOTSUBO Hidefumi, Kodaira-shi Tokyo 187-8531 (JP)
(74) Representative: Oxley, Robin John George
(86) International application number: PCT/JP2013/083072
(87) International publication number: WO 2014/103701

(56) References cited:
- EP-A1- 0 561 222
- EP-A2- 0 353 006
- FR-A1- 2 297 144
- JP-A- H02 182 501
- JP-A- 2009 286 208
- JP-A- 2010 208 558
- JP-A- 2011 156 905
- US-A- 3 219 090

## Description

### Technical Field

The present invention relates to a non-pneumatic tire in which pressurized air need not be filled upon use.

Priority is claimed on Japanese Patent Application No. 2012-282663, filed December 26, 2012.

### Background Art

In a pneumatic tire of the related art that is filled with pressurized air and used, occurrence of a blowout is a structurally unavoidable problem.

In order to solve this problem, in recent years, for example, as disclosed in the following Patent Document 1, a non-pneumatic tire including an attachment body attached to an axle, a ring-shaped body configured to surround the attachment body from the outside in a tire radial direction, and a plurality of connecting members disposed between the attachment body and the ring-shaped body in a tire circumferential direction is proposed. Document of Related Art

### [Patent Document]

[Patent Document 1] Japanese Unexamined Patent Application, First Publication No. 2011-156905

Further prior art is disclosed in EP 0 561 222.

### Summary of Invention

### Technical Problem

However, in the non-pneumatic tire of the related art, upon assembly thereof, both end sections of each of a plurality of connecting members should be connected to the ring-shaped body and the attachment body, which not only increases manufacturing time, but also interferes with attempts to decrease weight. In addition, strength including shock resistance of the non-pneumatic tire should be investigated further.

In consideration of the above-mentioned circumstances, the present invention is directed to provide a non-pneumatic tire capable of easy assembly and suppression of an increase in weight.

### Solution to Problem

A non-pneumatic tire of the present invention is set out in Claim 1 and includes an attachment body attached to an axle; a ring member including an inner rim fitted onto the attachment body and an outer rim configured to surround the inner rim from the outside in a tire radial direction; and a plurality of connecting members disposed between the inner rim and the outer rim in a tire circumferential direction and configured to connect the rims to each other, wherein at least a portion of the ring member and the plurality of connecting members are integrally formed of a synthetic resin material having a bending modulus of elasticity obtained through a 3-point bending test pursuant to ISO 178 of 300 MPa or more and a Charpy impact value obtained at 23 °C through a Charpy impact test pursuant to ISO 179-1 of 5 kJ/m² or more.

In the present invention, since at least the portion of the ring member and the plurality of connecting members are integrally formed, when the non-pneumatic tire is assembled, even if both end sections of the plurality of connecting members are not connected to the inner rim and the outer rim, it is sufficient that the case body formed by integrally forming at least the portion of the ring member and the plurality of connecting members be mounted on the attachment body, and thus manufacturing time can be reduced.

In addition, since at least the portion of the ring member and the plurality of connecting members are integrally formed, for example, an increase in weight can be suppressed in comparison with the case in which both end sections of the connecting members are connected to the inner rim and the outer rim using a fastening member or the like.

Further, since the bending modulus of elasticity of the synthetic resin material that integrally forms at least the portion of the ring member and the plurality of connecting members is set within the predetermined range, strength necessary and sufficient for the non-pneumatic tire can be reliably obtained.

In addition, when the bending modulus of elasticity of the synthetic resin material is 12000 MPa or less, good ride comfort characteristics can be provided.

Moreover, since the Charpy impact value of the synthetic resin material is set within the range, for example, during travel of the vehicle on which the tire is mounted, even if the non-pneumatic tire comes in come in contact with a curb or the like, occurrence of cracks in the tire can be suppressed, and the tire can collide with a step difference or pass over the step difference.

The connecting members include first elastic connecting plates and second elastic connecting plates configured to connect the rims to each other, one end sections of the first elastic connecting plates connected to the outer rim are disposed closer to one side in the tire circumferential direction than the other end sections connected to the inner rim, one end sections of the second elastic connecting plates connected to the outer rim aredisposed closer to the other side in the tire circumferential direction than the other end sections connected to the inner rim, the plurality of first elastic connecting plates aredisposed in the tire circumferential direction at one positions in the tire width direction, and the plurality of second elastic connecting plates aredisposed in the tire circumferential direction at other positions in the tire width direction different from the one positions in the tire width direction.

In this case, since the plurality of first elastic connecting plates are disposed in the tire circumferential direction at the one positions in the tire width direction, and the plurality of second elastic connecting plates are disposed in the tire circumferential direction at the other positions in the tire width direction, interference between the connecting members neighboring in the tire circumferential direction can be suppressed, and restriction on the number disposed can be suppressed.

In addition, since one end sections of the first elastic connecting plates connected to the outer rim are disposed closer to one side in the tire circumferential direction than the other end sections connected to the inner rim and one end sections of the second elastic connecting plates connected to the outer rim are disposed closer to the other side in the tire circumferential direction than the other end sections connected to the inner rim, when an external force is applied to the non-pneumatic tire, the first elastic connecting plates and the second elastic connecting plates can be easily elastically deformed, and good ride comfort characteristics can be obtained by providing flexibility in the non-pneumatic tire.

In addition, the ring member are divided into one split ring member disposed at one side in the tire width direction and another split ring member disposed at the other side in the tire width direction, the one split ring member are integrally formed with the first elastic connecting plates, and the other split ring member are integrally formed with the second elastic connecting plates.

In this case, in the first split case body in which the one split ring member and the first elastic connecting plates are integrally formed and the second split case body in which the other split ring member and the second elastic connecting plates are integrally formed, only the plurality of first elastic connecting plates or the plurality of second elastic connecting plates extending in a certain direction are disposed between the outer rim and the inner rim when the tire is seen in the side view of the tire from the tire width direction, and the others extending in another direction are not disposed therebetween.

For this reason, when the ring member and the connecting members are formed, first, the non-pneumatic tire can be easily and reliably formed in comparison with the case in which the case body having a complex structure is formed as all of the ring member and the connecting members are integrally formed by forming the first and second split case bodies that can be simply and easily formed.

Further, the one split ring member and the first elastic connecting plates, and the other split ring member and the second elastic connecting plates may be integrally formed through injection molding.

In this case, since the first split case body and the second split case body are integrally formed through injection molding, the non-pneumatic tire can be more easily formed.

Moreover, as described above, in each of the split case bodies, since only one of the groups of elastic connecting plates is disposed between the outer rim and the inner rim, when the split case bodies are integrally formed through injection molding, the molten resin can easily arrive at corners in a mold, a structure of the mold can be suppressed from becoming complicated, and the non-pneumatic tire can be more easily and reliably formed.

In addition, one end sections of a first elastic connecting plate and a second elastic connecting plate of one of the connecting members may be disposed at different positions in the tire width direction and connected at the same position in the tire circumferential direction in an inner circumferential surface of the outer rim, and the connecting member may be line-symmetrically formed with respect to an imaginary line passing through each of the one end sections and extending in the tire radial direction when the tire is seen in a side view of the tire from the tire width direction.

In this case, since the connecting member is line-symmetrically formed with respect to the imaginary line when seen from a side view of the tire, occurrence of a difference between a spring constant along one side in the tire circumferential direction of the non-pneumatic tire and a spring constant along the other side can be suppressed, and good controllability can be provided.

### Effects of the Invention

According to the present invention, the non-pneumatic tire can be easily assembled, and an increase in weight thereof can be suppressed.

### Brief Description of Drawings

Fig. 1 is a partially exploded schematic perspective view of a non-pneumatic tire according to an embodiment of the present invention.
Fig. 2 is a side view of the non-pneumatic tire shown in Fig. 1 when seen from one side in a tire width direction.
Fig. 3 is a plan view of a first split case body of the non-pneumatic tire shown in Fig. 1, in which a split ring member of one side and a first elastic connecting plate are integrally formed, when seen from one side in the tire width direction, or a plan view of a second split case body in which a split ring member of the other side and a second elastic connecting plate are integrally formed, when seen from the other side in the tire width direction.
Fig. 4 is an enlarged view showing a major portion of Fig. 2.

### Description of Embodiments

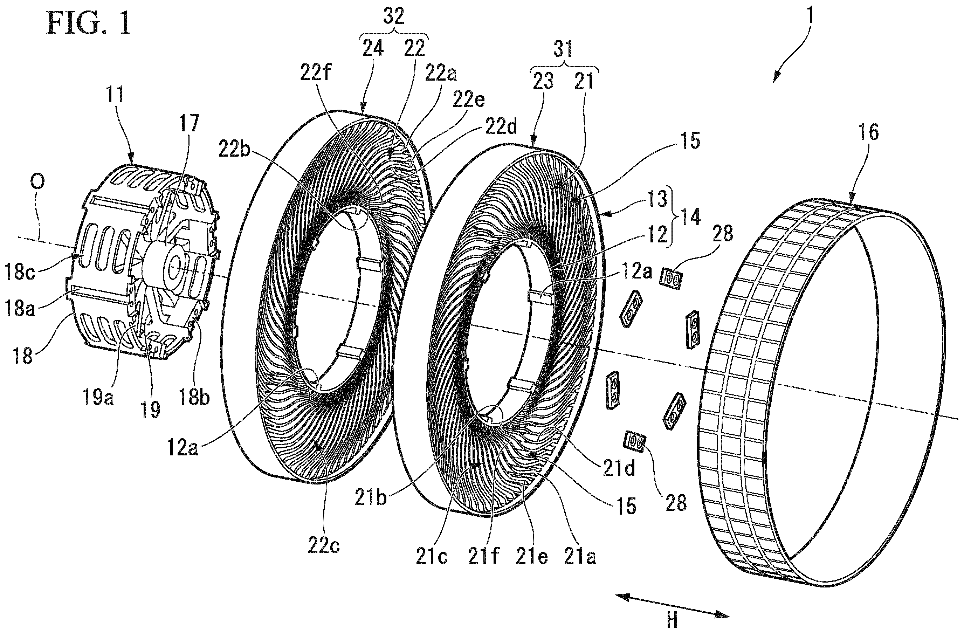

Hereinafter, an embodiment of a non-pneumatic tire according to the present invention will be described with reference to Figs. 1 to 4.

A non-pneumatic tire 1 includes an attachment body 11 attached to an axle (not shown), a ring member 14 including an inner rim 12 fitted onto the attachment body 11 and an outer rim 13 configured to surround the inner rim 12 from the outside in a tire radial direction, a plurality of connecting members 15 disposed between the inner rim 12 and the outer rim 13 in a tire circumferential direction and configured to connect the rims 12 and 13 to each other in a relatively elastically displaceable manner, and a tread member 16 disposed at an outer circumferential surface side of the outer rim 13 throughout the entire circumference.

Here, the attachment body 11, the inner rim 12, the outer rim 13, and the tread member 16 are disposed on the same axis as a common axis. Hereinafter, the common axis is referred to as an axis O, a direction along the axis O is referred to as a tire width direction H, a direction perpendicular to the axis O is referred to as a tire radial direction, and a direction around the axis O is referred to as a tire circumferential direction. Further, the attachment body 11, the inner rim 12, the outer rim 13, and the tread member 16 are disposed such that central sections in the tire width direction H coincide with each other.

In the ring member 14, the outer rim 13 has a larger size in the tire width direction H, i.e., a larger width, than the inner rim 12. In addition, a plurality of ridge sections 12a protruding inward in the tire radial direction and extending throughout the entire length in the tire width direction H are disposed at an inner circumferential surface of the inner rim 12 at intervals in the tire circumferential direction.

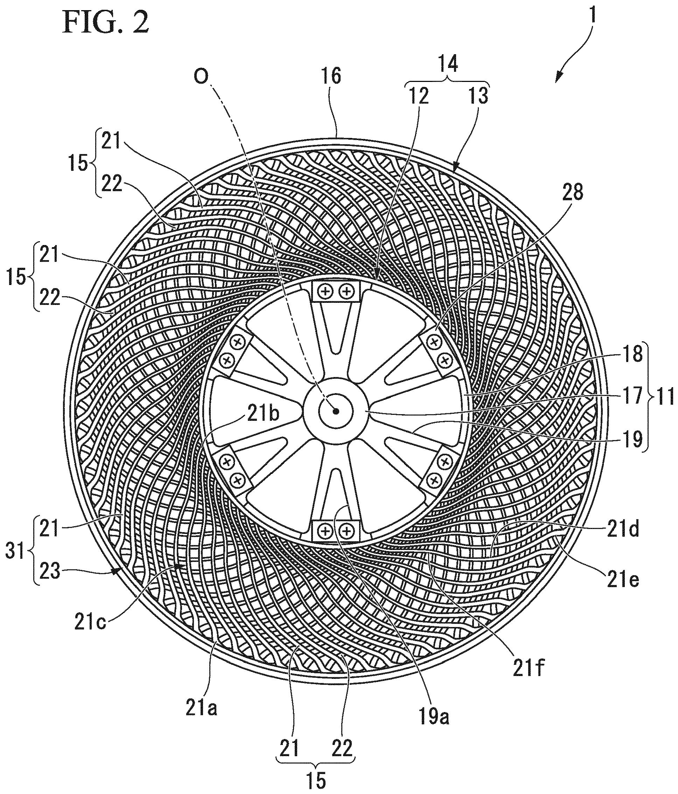

As shown in Figs. 1 and 2, the attachment body 11 includes a mounting cylindrical section 17 on which a front end section of the axle is mounted, an outer ring section 18 configured to surround the mounting cylindrical section 17 from the outside in the tire radial direction, and a plurality of ribs 19 configured to connect the mounting cylindrical section 17 and the outer ring section 18.

The mounting cylindrical section 17, the outer ring section 18, and the ribs 19 are integrally formed of a metal material such as an aluminum alloy or the like. The mounting cylindrical section 17 and the outer ring section 18 are formed in a cylindrical shape and disposed on the same axis as the axis O. The plurality of ribs 19 are disposed at equal intervals in the circumferential direction.

A plurality of key groove sections 18a concaved inward in the tire radial direction and extending in the tire width direction H are formed at an outer circumferential surface of the outer ring section 18 at intervals in the tire circumferential direction. In the outer circumferential surface of the outer ring section 18, the key groove sections 18a are opened at only one side of both ends in the tire width direction H and closed at the other side. The ridge sections 12a of the inner rim 12 in the ring member 14 are fitted into the key groove sections 18a.

Further, in wall surfaces configured to form the key groove sections 18a, a pair of side wall surfaces opposite to each other in the tire circumferential direction are perpendicular to a bottom wall surface. In addition, in outer surfaces of the ridge sections 12a, the pair of side wall surfaces standing upward from the inner circumferential surface of the inner rim 12 are perpendicular to a top wall surface directed inward in the tire radial direction. Sizes in the tire circumferential direction of the ridge sections 12a and the key groove sections 18a are equal to each other.

Here, in an edge of one side in the tire width direction H of the outer ring section 18, concave sections 18b concaved toward the other side in the tire width direction H and into which plate members 28 are fitted are formed at positions corresponding to the key groove sections 18a. Through-holes are formed in the plate members 28, and in the wall surfaces that form the concave sections 18b, female screw sections in communication with the through-holes of the plate members 28 fitted into the concave sections 18b are formed in the wall surface facing the one side in the tire width direction H. Further, the plurality of female screw sections and the plurality of through-holes are formed at intervals in the tire circumferential direction.

Then, the ring member 14 is fixed to the attachment body 11 by bolts threaded into the female screw sections through the through-holes of the plate members 28 fitted into the concave sections 18b in a state in which the inner rim 12 is fitted onto the attachment body 11 from the outside and the ridge sections 12a are fitted into the key groove sections 18a. In this state, the ridge sections 12a are sandwiched between the plate members 28 and the other end wall surfaces of the wall surfaces forming the concave sections 18b disposed at the other end in the tire width direction H and facing the one side in the tire width direction H.

Further, a plurality of hole arrays 18c, in each of which a plurality of weight-reducing holes passing in the tire radial direction are disposed at intervals in the tire width direction H, are formed at a portion of the outer ring section 18 disposed between the key groove sections 18a neighboring in the tire circumferential direction at intervals in the tire circumferential direction. In addition, weight-reducing holes 19a passing in the tire width direction H are also formed in the ribs 19.

The tread member 16 is formed in a cylindrical shape, and integrally covers the outer circumferential surface side of the outer rim 13 of the ring member 14 throughout the entire region. The tread member 16 is formed of, for example, natural rubber and/or vulcanized rubber in which a rubber composition is vulcanized, a thermoplastic material, or the like. For example, a thermoplastic elastomer, a thermoplastic resin, or the like is provided as the thermoplastic material. For example, an amide-based thermoplastic elastomer (TPA), an ester-based thermoplastic elastomer (TPC), an olefin-based thermoplastic elastomer (TPO), a styrene-based thermoplastic elastomer (TPS), a urethane-based thermoplastic elastomer (TPU), a thermoplastic rubber cross-linked body (TPV), or another thermoplastic elastomer (TPZ) or the like, defined by Japanese Industrial Standards JIS K6418, is provided as the thermoplastic elastomer. For example, a urethane resin, an olefin resin, a polyvinyl chloride resin, a polyamide resin, or the like, is provided as the thermoplastic resin. Further, in view of an abrasion resistance property, the tread member 16 may be formed of the vulcanized rubber.

The connecting members 15 include first elastic connecting plates 21 and second elastic connecting plates 22 configured to connect the inner rim 12 and the outer rim 13 of the ring member 14.

The plurality of (in the example shown, 60) connecting members 15 are installed in the tire circumferential direction such that the plurality of first elastic connecting plates 21 are disposed in the tire circumferential direction at one predetermined positions in the tire width direction H, and the plurality of second elastic connecting plates 22 are disposed in the tire circumferential direction at other positions in the tire width direction H different from the one predetermined positions in the tire width direction H.

That is, the plurality of first elastic connecting plates 21 are disposed in the tire circumferential direction at the same positions as in the tire width direction H, and the plurality of second elastic connecting plates 22 are disposed in the tire circumferential direction at predetermined positions in the same tire width direction H spaced apart from the first elastic connecting plates 21 in the tire width direction H.

Further, the plurality of connecting members 15 are disposed at rotationally symmetric positions with respect to the axis O between the inner rim 12 and the outer rim 13 of the ring member 14. In addition, all of the connecting members 15 have the same shape and the same size. Further, widths of the connecting members 15 are smaller than a width of the outer rim 13.

Then, the first elastic connecting plates 21 neighboring in the tire circumferential direction do not come in contact with each other, and the second elastic connecting plates 22 neighboring in the tire circumferential direction do not come in contact with each other either. Further, the first elastic connecting plates 21 and the second elastic connecting plates 22 neighboring in the tire width direction H do not come in contact with each other either.

Further, the first elastic connecting plates 21 and the second elastic connecting plates 22 have the same widths. In addition, the first elastic connecting plates 21 and the second elastic connecting plates 22 also have the same thicknesses.

Here, in the first elastic connecting plates 21, one end sections 21a connected to the outer rim 13 are disposed closer to one side in the tire circumferential direction than other end sections 21b connected to the inner rim 12, and in the second elastic connecting plates 22, one end sections 22a connected to the outer rim 13 are disposed closer to the other side in the tire circumferential direction than the other end sections 22b connected to the inner rim 12.

In addition, the one end sections 21a and 22a of the first elastic connecting plates 21 and the second elastic connecting plates 22 of one of the connecting members 15 are disposed at different positions in the tire width direction H and connected at the same positions in the tire circumferential direction in the inner circumferential surface of the outer rim 13.

In the example shown, in the first elastic connecting plates 21 and the second elastic connecting plates 22, a plurality of curved sections 21d to 21f and 22d to 22f curved in the tire circumferential direction are formed at intermediate portions 21c and 22c disposed between the one end sections 21a and 22a and the other end sections 21b and 22b in a direction in which the connecting plates 21 and 22 extend when the tire 1 is seen from the tire width direction H in a side view of the tire. In the plurality of curved sections 21d to 21f and 22d to 22f of all of the connecting plates 21 and 22, curve directions of the curved sections 21d to 21f and 22d to 22f neighboring in the above-mentioned extending direction are opposite to each other.

The plurality of curved sections 21d to 21f formed at the first elastic connecting plates 21 have the first curved sections 21d curved to protrude toward the other side in the tire circumferential direction, the second curved sections 21e disposed between the first curved sections 21d and the one end sections 21a and curved to protrude toward the one side in the tire circumferential direction, and the third curved sections 21f disposed between the first curved sections 21d and the other end sections 21b and curved to protrude toward the one side in the tire circumferential direction.

The plurality of curved sections 22d to 22f formed at the second elastic connecting plates 22 have the first curved sections 22d curved to protrude toward the one side in the tire circumferential direction, the second curved sections 22e disposed between the first curved sections 22d and the one end sections 22a and curved to protrude toward the other side in the tire circumferential direction, and the third curved sections 22f disposed between the first curved sections 22d and the other end sections 22b and curved to protrude toward the other side in the tire circumferential direction.

In the example shown, the first curved sections 21d and 22d have larger radii of curvature when seen from the side view of the tire than the second curved sections 21e and 22e and the third curved sections 21f and 22f. Further, the first curved sections 21d and 22d are disposed at a central section in the extending direction of the first elastic connecting plates 21 and the second elastic connecting plates 22.

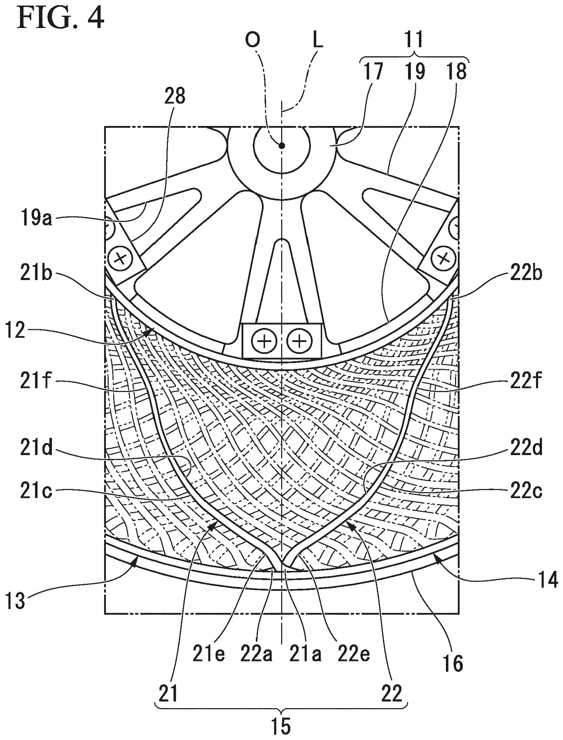

Further, the lengths of all of the elastic connecting plates 21 and 22 are equal to one another, and, as shown in Fig. 4, the other end sections 21b and 22b of all of the elastic connecting plates 21 and 22 are connected to positions spaced the same angle (for example, 20° or more to 135° or less) from positions in the outer circumferential surface of the inner rim 12 opposite to the one end sections 21a and 22a in the tire radial direction at one side and the other side in the tire circumferential direction about the axis O when seen in the side view of the tire. In addition, the first curved sections 21d and 22d, the second curved sections 21e and 22e, and the third curved sections 21f and 22f of the first elastic connecting plates 21 and the second elastic connecting plates 22 protrude to oppose each other in the tire circumferential direction and have the same sizes.

Accordingly, as shown in Fig. 4, shapes of the connecting members 15 when seen in the side view of the tire extend in the tire radial direction, and are linearly symmetric with respect to an imaginary line L passing through the one end sections 21a and 22a of all of the connecting plates 21 and 22.

In addition, in all of the elastic connecting plates 21 and 22, one end side portions extending from the central section to the one end sections 21a and 22a in the above-mentioned extending direction have larger thicknesses than the other end side portions extending from the central section to the other end sections 21b and 22b. Accordingly, strength of the one end side portions to which a large load in the first and second elastic connecting plates 21 and 22 is easily applied can be increased while suppressing an increase in weight of the connecting members 15 and securing flexibility of the connecting members 15. Further, the one end side portions smoothly continue to the other end side portions with no step difference.

Then, in the embodiment, the ring member 14 and the plurality of connecting members 15 are integrally formed of a synthetic resin material. A bending modulus of elasticity of the synthetic resin material obtained through a 3-point bending test pursuant to ISO 178 is 300 MPa or more, and a Charpy impact value obtained at 23 °C through a Charpy impact test pursuant to ISO 179-1 is 5 kJ/m² or more. In addition, the bending modulus of elasticity of the synthetic resin material is 12000 MPa or less. Further, the synthetic resin material may be only one kind of resin material, a mixture including two or more kinds of resin materials, or a mixture including one or more kinds of resin material and one or more kinds of elastomers, and further, for example, may include additives such as an antioxidant, a plasticizer, a filler, a pigment, or the like.

Further, in the embodiment, as shown in Fig. 1, the ring member 14 is divided into one split ring member 23 disposed at one side in the tire width direction H and another split ring member 24 disposed at the other side in the tire width direction H. Further, in the shown example, the ring member 14 is divided at a central section in the tire width direction H.

Then, the one split ring member 23 is integrally formed with the first elastic connecting plates 21, and the other split ring member 24 is integrally formed with the second elastic connecting plates 22.

Further, in the embodiment, the one split ring member 23 and the first elastic connecting plates 21, and the other split ring member 24 and the second elastic connecting plates 22 are integrally formed through injection molding.

Hereinafter, a member obtained by integrally forming the one split ring member 23 and the first elastic connecting plates 21 is referred to as a first split case body 31, and a member obtained by integrally forming the other split ring member 24 and the second elastic connecting plates 22 is referred to as a second split case body 32.

Here, the injection molding may be a general method of simultaneously forming both of the entire first and second split case bodies 31 and 32, and in the first and second split case bodies 31 and 32, one of the one and the other split ring members 23 and 24 and the first and second elastic connecting plates 21 and 22 may be an insert product, and the other may be an insert molding product formed through injection molding, or so-called two color formation, or the like.

In addition, in the first and second split case bodies 31 and 32, the one and the other split ring members 23 and 24 and the first and second elastic connecting plates 21 and 22 may be formed of different materials, or may be formed of the same material.

Further, when both of the entire first and second split case bodies 31 and 32 are simultaneously injection-molded, the plurality of ridge sections 12a formed at the inner rim 12 may be a gate portion.

In the first and second split case bodies 31 and 32, a central section in the tire width direction H of the first and second elastic connecting plates 21 and 22, a central section in the tire width direction H of the outer rim 13, and a central section in the tire width direction H of the inner rim 12 coincide with each other, and the inner rim 12 has a smaller width than the outer rim 13, and has the same width as the first elastic connecting plates 21 and the second elastic connecting plates 22.

Then, edges in the tire width direction H of the outer rim 13 of the one split ring member 23 and the outer rim 13 of the other split ring member 24 are connected by, for example, welding, fusion, adhesion, or the like. Further, among these, in the case of the welding, for example, hot plate welding or the like may be employed.

In addition, edges in the tire width direction H of the inner rim 12 of the one split ring member 23 and the inner rim 12 of the other split ring member 24 are separated from each other in the tire width direction H. Accordingly, generation of burrs on the inner circumferential surface of the inner rim 12 fitted onto the attachment body 11 from the outside is prevented.

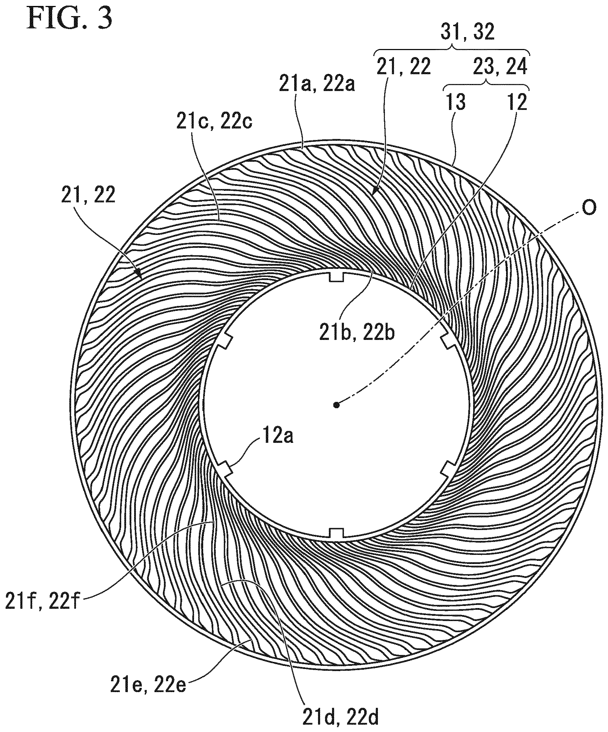

In addition, the first split case body 31 and the second split case body 32 have the same shape and the same size as shown in Fig. 3 in a state before the bodies 31 and 32 are connected as described above.

Then, when connected as described above, the non-pneumatic tire 1 is obtained as the edges in the tire width direction H of the outer rims 13 of the first split case body 31 and the second split case body 32 match to be connected to each other in a state in which directions in the tire width direction H of both of the split case bodies 31 and 32 are opposite to each other while matching the positions in the tire circumferential direction of the first split case body 31 and the second split case body 32, such that the connecting members 15 are line-symmetric to each other as described above when seen in the side view of the tire.

As described above, since the non-pneumatic tire 1 according to the embodiment includes the first split case body 31 in which the one split ring member 23 and the first elastic connecting plates 21 are integrally formed, and the second split case body 32 in which the other split ring member 24 and the second elastic connecting plates 22 are integrally formed, when the non-pneumatic tire 1 is assembled, even if not all of the end sections 21a, 22a, 21b and 22b of the plurality of connecting members 15 are connected to the inner rim 12 and the outer rim 13, since it is enough that the first and second split case bodies 31 and 32 be mounted on the attachment body 11, manufacturing time can be reduced.

In addition, since the first and second split case bodies 31 and 32 are provided, for example, an increase in weight can be suppressed in comparison with the case in which all of the end sections 21a, 22a, 21b and 22b of the connecting member 15 are connected to the inner rim 12 and the outer rim 13 using a fastening member or the like.

In particular, since the bending modulus of elasticity of the synthetic resin material that integrally forms the ring member 14 and the plurality of connecting members 15 is set within a predetermined range, strength necessary and sufficient for the non-pneumatic tire 1 can be reliably provided.

In addition, when the bending modulus of elasticity of the synthetic resin material is 12000 MPa or less, good ride comfort characteristics can be provided.

Moreover, since the Charpy impact value of the synthetic resin material is set within this range, for example, during traveling of the vehicle on which the tire 1 is mounted, even when the non-pneumatic tire 1 comes in contact with a curb or the like, generation of cracks in the tire 1 can be suppressed, and the tire 1 can collide with the step difference or pass over the step difference.

Further, since the plurality of first elastic connecting plates 21 are disposed in the tire circumferential direction at one positions in the tire width direction H and the plurality of second elastic connecting plates 22 are disposed in the tire circumferential direction at other positions in the tire width direction H, interference between the connecting members 15 neighboring in the tire circumferential direction can be suppressed, and restriction on the number disposed can be suppressed.

In addition, the one end sections 21a of the first elastic connecting plates 21 connected to the outer rim 13 are disposed closer to one side in the tire circumferential direction than the other end sections 21b connected to the inner rim 12, and the one end sections 22a of the second elastic connecting plates 22 connected to the outer rim 13 are disposed closer to the other side in the tire circumferential direction than the other end sections 22b connected to the inner rim 12. For this reason, when an external force is applied to the non-pneumatic tire 1, the first elastic connecting plate 21 and the second elastic connecting plate 22 can be easily elastically deformed. Accordingly, flexibility can be provided to the non-pneumatic tire 1 to secure good ride comfort characteristics.

Further, in the first split case body 31 and the second split case body 32, either the plurality of first elastic connecting plates 21 or the plurality of second elastic connecting plates 22 which extend in a certain direction are disposed in plural between the outer rim 13 and the inner rim 12 when seen in the side view of the tire, and the others which extend in another direction are not disposed therebetween. For this reason, when the ring member 14 and the connecting members 15 are formed, first, by forming the first and second split case bodies 31 and 32 having structures that can be simply and easily formed, all of the ring member 14 and the connecting members 15 can be integrally formed. Accordingly, in comparison with the case in which the case body having a complex structure is formed, the non-pneumatic tire 1 can be easily and reliably formed.

In addition, since the first and second split case bodies 31 and 32 are integrally formed through injection molding, the non-pneumatic tire 1 can be more easily formed.

However, as described above, in the split case bodies 31 and 32, only one of the groups of elastic connecting plates 21 and 22 is disposed between the outer rim 13 and the inner rim 12. Accordingly, when the split case bodies 31 and 32 are integrally formed through injection molding, a molten resin can easily and reliably arrive at corners in the mold, and the structure of the mold can be suppressed from becoming complicated. Accordingly, the non-pneumatic tire 1 can be more easily and reliably formed.

In addition, since the connecting members 15 are line-symmetrically formed with respect to the imaginary line L when seen in the side view of the tire, occurrence of a difference between a spring constant along one side in the tire circumferential direction of the non-pneumatic tire 1 and a spring constant along the other side can be suppressed, and good controllability can be provided.

Further, the technical spirit of the present invention is not limited to the embodiment and various modifications may be made without departing from the spirit of the present invention.

For example, curve directions of the curved sections 21d to 21f in the first elastic connecting plates 21 and curve directions of the curved sections 22d to 22f in the second elastic connecting plates 22 are not limited to the embodiment but may be appropriately varied.

In addition, in the embodiment, a configuration in which one of the first elastic connecting plates 21 or the second elastic connecting plates 22 is provided as the connecting members 15 is shown. However, instead of this, a configuration in which both a plurality of the first elastic connecting plates 21 and a plurality of the second elastic connecting plates 22 are provided as the connecting members 15 at different positions in the tire width direction H may be employed.

In addition, the plurality of connecting members 15 may be disposed in the tire width direction H between the inner rim 12 and the outer rim 13.

In addition, unlike the embodiment, for example, the other end sections 21b and 22b of the first elastic connecting plates 21 and the second elastic connecting plates 22 may be connected at opposite positions of the outer circumferential surface of the inner rim 12 with the axis O interposed therebetween in the tire radial direction. Alternatively, in the outer circumferential surface of the inner rim 12, they may be connected to the one end sections 21a and 22a of the first elastic connecting plate 21 and the second elastic connecting plate 22 at opposite positions or the like in the tire radial direction.

In addition, unlike the embodiment, the one end sections 21a and 22a of all of the connecting plates 21 and 22 may be connected to the inner circumferential surface of the outer rim 13 at different positions in the tire circumferential direction.

Further, a gap in the tire width direction H may not be provided between the inner rim 12 of the one split ring member 23 and the inner rim 12 of the other split ring member 24.

In addition, the ring member 14 may be divided into three portions or more in the tire width direction H, or may not be divided.

Further, only the inner rim 12 of the ring member 14 and the connecting members 15 may be integrally formed of the synthetic resin material, or only the outer rim 13 of the ring member 14 and the connecting members 15 may be integrally formed of the synthetic resin material.

Moreover, the components of the above-mentioned embodiment may be appropriately substituted with known components or the above-mentioned variants may be appropriately combined without departing from the spirit of the present invention.

A verification test with respect to the above-mentioned effects was performed.

As an example and shown in Table 1, seven kinds of non-pneumatic tires 1 in which the ring member 14 and the plurality of connecting members 15 were integrally formed of the synthetic resin material having the bending modulus of elasticity of 300 MPa or more and the Charpy impact value of 5 kJ/m² or more were formed. As a comparative example, as shown in Table 2, two kinds of non-pneumatic tires in which the ring member and the plurality of connecting members were integrally formed of the synthetic resin material having the Charpy impact value of less than 5 kJ/m² were formed. Further, "N.B." of a column of the Charpy impact value in Example 7 of Table 1 shows that a specimen did not break at 23 °C in the Charpy impact test pursuant to ISO 179-1, and the Charpy impact value is 5 kJ/m² or more.

Here, with respect to the nine kinds of non-pneumatic tires, it was checked as to whether the tire broke when a compressive force of 3000 kN was applied in the tire radial direction or whether the tire broke when the tire was compressively deformed by 20 mm in the tire radial direction (tire estimation (static)).

As a result, it was confirmed that none of the non-pneumatic tires of the examples and comparative examples formed of the synthetic resin material having the bending modulus of elasticity of 300 MPa or more broke.

In addition, the nine kinds of non-pneumatic tires were mounted on wheels of a rear side of an electric cart, and an impact force was applied by causing the mounted non-pneumatic tire to pass over a square bar having one side of 4 cm while the cart was traveling at a speed of 6 km per hour under an atmosphere temperature of 23 °C. Here, it was checked as to whether cracks were generated in the ring member or the connecting members (tire estimation (dynamic)).

As a result, it was confirmed that no cracks were generated in any of the non-pneumatic tires 1 of the examples formed of the synthetic resin material having the Charpy impact value of 5 kJ/m² or more. Meanwhile, it was confirmed that cracks were generated in all of the non-pneumatic tires of the comparative examples formed of the synthetic resin material having the Charpy impact value of less than 5 kJ/m².

**[Table 1]**

| | Embodiments | | | | | | |
|---|---|---|---|---|---|---|---|
| | 1 | 2 | 3 | 4 | 5 | 6 | 7 |
| Kind of resin | ABS | ABS | PPS | N6 | N6 | N66 | TPAE |
| Maker | Toray Industries | Toray Industries | Toray Industries | Toray Industries | Toray Industries | Toray Industries | Ube Industries |
| Grade | Toyolac 500 | Toyolac 100 | Torelina A673M | Aramin CM1007 | Aramin CM1011G-15 | Aramin CM3007 | XPA9055 |
| Bending modulus of elasticity (MPa) | 2690 | 2350 | 10000 | 800 | 2700 | 1400 | 300 |
| Charpy impact value (kJ/m²) | 13 | 20 | 15 | 31 | 9.5 | 23.5 | N.B. |
| Tire estimation (static) | ○ | ○ | ○ | ○ | ○ | ○ | ○ |
| Tire estimation (dynamic) | ○ | ○ | ○ | ○ | ○ | ○ | ○ |

**[Table 2]**

| | Comparative Examples | |
|---|---|---|
| | 1 | 2 |
| Kind of resin | PBT | PS |
| Maker | Toray Industries | DIC Corp. |
| Grade | Torecon 1401-X04 | GPPS CR-3500 |
| Bending modulus of elasticity (MPa) | 2500 | 3300 |
| Charpy impact value (kJ/m²) | 4.8 | 1.6 |
| Tire estimation (static) | ○ | X |
| Tire estimation (dynamic) | X | X |

### Industrial Applicability

A non-pneumatic tire can be easily assembled, and an increase in weight can be suppressed.

### Description of Reference Signs

- 1: non-pneumatic tire
- 11: attachment body
- 12: inner rim
- 13: outer rim
- 14: ring member
- 15: connecting member
- 21: first elastic connecting plate
- 22: second elastic connecting plate
- 21a, 22a: one end section
- 21b, 22b: other end section
- 23: one split ring member
- 24: other split ring member
- H: tire width direction
- L: imaginary line
- O: axis

## Claims

1. A non-pneumatic tire (1) comprising:
an attachment body (11) attached to an axle;
a ring member (14) including an inner rim (12) fitted onto the attachment body (11) and an outer rim (13) configured to surround the inner rim (12) from the outside in a tire radial direction; and
a plurality of connecting members (15) disposed between the inner rim (12) and the outer rim (13) in a tire circumferential direction and configured to connect the rims (12, 13) to each other,
wherein at least a portion of the ring member (14) and the plurality of connecting members (15) are integrally formed of a synthetic resin material having a bending modulus of elasticity obtained through a 3-point bending test pursuant to ISO 178 of 300 MPa or more and a Charpy impact value obtained at 23 °C through a Charpy impact test pursuant to ISO 179-1 of 5 kJ/m² or more,
wherein the connecting members (15) comprise first elastic connecting plates (21) and second elastic connecting plates (22) configured to connect the rims (12, 13) to each other,
one end sections (21a) of the first elastic connecting plates (21) connected to the outer rim (13) are disposed closer to one side in the tire circumferential direction than the other end sections (21b) connected to the inner rim (12),
one end sections (22a) of the second elastic connecting plates (22) connected to the outer rim (13) are disposed closer to the other side in the tire circumferential direction than the other end sections (22b) connected to the inner rim (12), and
the plurality of first elastic connecting plates (21) are disposed in the tire circumferential direction at one positions in the tire width direction, and the plurality of second elastic connecting plates (22) are disposed in the tire circumferential direction at other positions in the tire width direction different from the one positions in the tire width direction; **characterised in that**
the ring member (14) is divided into one split ring member (23) disposed at one side in the tire width direction and another split ring member (24) disposed at the other side in the tire width direction,
the one split ring member (23) is integrally formed with the first elastic connecting plates (21), and
the other split ring member (24) is integrally formed with the second elastic connecting plates (22).

2. The non-pneumatic tire (1) according to Claim 1, wherein the one split ring member (23) and the first elastic connecting plates (21), and the other split ring member (24) and the second elastic connecting plates (22) are integrally formed through injection molding.

3. The non-pneumatic tire (1) according to Claim 1 or 2, wherein the one end sections (21a, 22a) of a first elastic connecting plate (21) and a second elastic connecting plate (22) of one of the connecting members (15) are disposed at different positions in the tire width direction and connected at the same position in the tire circumferential direction in an inner circumferential surface of the outer rim (13), and
each of the connecting members (15) is line-symmetrically formed with respect to an imaginary line (L) passing through each of the one end sections (21a, 22a) and extending in the tire radial direction when the tire (1) is seen in a side view of the tire (1) from the tire width direction.

## Patentansprüche

1. Luftloser Reifen (1), Folgendes umfassend:
ein Befestigungsgehäuse (11), befestigt an einer Achse;
ein Ringglied (14), beinhaltend eine innere Felge (12), eingepasst an das Befestigungsgehäuse (11) und eine äußere Felge (13), konfiguriert, um die innere Felge (12) von außen in einer Reifenradialrichtung zu umgeben; und
eine Vielzahl von Verbindungsgliedern (15), angeordnet zwischen der inneren Felge (12) und der äußeren Felge (13) in einer Reifenumfangsrichtung und konfiguriert zum Verbinden der Felgen (12, 13) miteinander,
wobei mindestens ein Abschnitt des Ringgliedes (14) und die Vielzahl von Verbindungsgliedern (15) einstückig aus einem Kunstharzmaterial geformt sind, welches ein Biege-Elastizitätsmodul, welches in einem 3-Punkt-Biegeversuch nach ISO 178 ermittelt wird, von 300 MPa oder darüber besitzt und einen Charpy-Schlagzähigkeitswert bei 23 °C, welcher in einem Charpy Schlagzähigkeitsversuch nach ISO 179-1 ermittelt wird, von 5 kJ/m² oder darüber besitzt,
wobei die Verbindungsglieder (15) erste elastische Verbindungsplatten (21) und zweite elastische Verbindungsplatten (22) umfassen, konfiguriert zum Verbinden der Felgen (12, 13) miteinander,
wobei erste Endabschnitte (21a) der ersten elastischen Verbindungsplatten (21), welche mit der äußeren Felge (13) verbunden sind, näher an einer Seite in der Reifenumfangsrichtung angeordnet sind als die anderen Endabschnitte (22b), welche mit der inneren Felge (12) verbunden sind, und
wobei erste Endabschnitte (22a) der zweiten elastischen Verbindungsplatten (22), welche mit der äußeren Felge (13) verbunden sind, näher an der anderen Seite in der Reifenumfangsrichtung angeordnet sind als die anderen Endabschnitte (22b), welche mit der inneren Felge (12) verbunden sind, und
wobei die Vielzahl von ersten elastischen Verbindungsplatten (21) in der Reifenumfangsrichtung an bestimmten Positionen in der Reifenbreitenrichtung angeordnet sind, und die Vielzahl von zweiten elastischen Verbindungsplatten (22) in der Reifenumfangsrichtung an anderen Positionen in der Reifenbreitenrichtung angeordnet sind, welche sich von den einen Positionen in der Reifenbreitenrichtung unterscheiden; **dadurch gekennzeichnet, dass**
das Ringglied (14) in ein bestimmtes Spalt-Ringglied (23) geteilt ist, welches an einer Seite in der Reifenbreitenrichtung angeordnet ist und in ein anderes Spalt-Ringglied (24), welches an der anderen Seite in der Reifenbreitenrichtung angeordnet ist,
wobei das eine Spalt-Ringglied (23) einstückig mit den ersten elastischen Verbindungsplatten (21) geformt ist, und
das andere Spalt-Ringglied (24) einstückig mit den zweiten elastischen Verbindungsplatten (22) geformt ist.

2. Luftloser Reifen (1) nach Anspruch 1, bei welchem das eine Spalt-Ringglied (23) und die ersten elastischen Verbindungsplatten (21) und das andere Spalt-Ringglied (24) und die zweiten elastischen Verbindungsplatten (22) einstückig im Spritzgussverfahren geformt werden.

3. Luftloser Reifen (1) nach Anspruch 1 oder 2, bei welchem die einen Endabschnitte (21a, 22a) der ersten elastischen Verbindungsplatte (21) und der zweiten elastischen Verbindungsplatte (22) eines der Verbindungsglieder (15) an unterschiedlichen Positionen in der Reifenbreitenrichtung angeordnet sind und an derselben Position in der Reifenumfangsrichtung in einer inneren Umfangsfläche der äußeren Felge (13) verbunden sind, und
jedes der Verbindungsglieder (15) achssymmetrisch in Bezug auf eine imaginäre Linie (L) geformt ist, welche jeden der einen Endabschnitte (21a, 22a) durchquert und sich in die Reifenradialrichtung erstreckt, wenn der Reifen (1) in einer Seitenansicht des Reifens (1) von der Reifenbreitenrichtung aus betrachtet wird.

## Revendications

1. Bandage pneumatique sans air (1), comprenant :
un corps de fixation (11) fixé sur un essieu ;
un élément annulaire (14) incluant une jante interne (12) fixée sur le corps de fixation (11), et une jante externe (13) configurée pour entourer la jante interne (12) à partir de l'extérieur, dans une direction radiale du bandage pneumatique ; et
plusieurs éléments de connexion (15) disposés entre la jante interne (12) et la jante externe (13), dans une direction circonférentielle du bandage pneumatique, et configurés pour connecter les jantes (12, 13) l'une à l'autre ;
dans lequel au moins une partie de l'élément annulaire (14) et les plusieurs éléments de connexion (15) sont formés intégralement à partir d'un matériau de résine synthétique, qui présente un module d'élasticité en flexion, déterminé par un test de flexion à 3 points selon la norme ISO 178, de plus de 300 MPa ou plus, et une valeur de résilience Charpy déterminée à 23°C par un essai de résilience Charpy selon la norme ISO 179-1 de 5 kJ/m² ou plus ;
dans lequel les éléments de connexion (15) comprennent des premières plaques de connexion élastiques (21) et des deuxièmes plaques de connexion élastiques (22) configurées pour connecter les jantes (12, 13) l'une à l'autre ;
des sections d'extrémité (21a) des premières plaques de connexion élastiques (24) connectées à la jante externe (13) sont disposées plus près d'un côté, dans la direction circonférentielle du bandage pneumatique, que les autres sections d'extrémité (21b) connectées à la jante interne (12) ;
des sections d'extrémité (22a) des deuxièmes plaques de connexion élastiques (22) connectées à la jante externe (13) sont disposées plus près de l'autre côté, dans la direction circonférentielle du bandage pneumatique, que les autres sections d'extrémité (22b) connectées à la jante interne (12) ; et
les plusieurs premières plaques de connexion élastiques (21) sont disposées, dans la direction circonférentielle du bandage pneumatique, au niveau de certaines positions dans la direction de la largeur du bandage pneumatique, et les plusieurs deuxièmes plaques de connexion élastiques (22) sont disposées, dans la direction circonférentielle du bandage pneumatique, au niveau d'autres positions, dans la direction de la largeur du bandage pneumatique, différentes desdites unes positions dans la direction de la largeur du bandage pneumatique ; **caractérisé en ce que** :
l'élément annulaire (14) est divisé en un certain élément annulaire fendu (23), disposé au niveau d'un côté dans la direction de la largeur du bandage pneumatique, et un autre élément annulaire fendu (24) disposé au niveau de l'autre côté dans la direction de la largeur du bandage pneumatique ;
ledit un élément annulaire fendu (23) est formé d'une seule pièce avec les premières plaques de connexion élastiques (21) ; et
ledit autre élément annulaire fendu (24) est formé d'une seule pièce avec les deuxièmes plaques de connexion élastiques (22).

2. Bandage pneumatique sans air (1) selon la revendication 1, dans lequel ledit un élément annulaire fendu (23) et les premières plaques de connexion élastiques (21), et ledit autre élément annulaire fendu (24) et les deuxièmes plaques de connexion élastiques (22) sont formés intégralement par moulage par injection.

3. Bandage pneumatique sans air selon les revendications 1 ou 2, dans lequel lesdites unes sections d'extrémité (21a, 22a) de la première plaque de connexion élastique (21) et de la deuxième plaque de connexion élastique (22) de l'un des éléments de connexion (15) sont disposées au niveau de positions différentes dans la direction de la largeur du bandage pneumatique, et sont connectées au niveau d'une même position, dans la direction circonférentielle du bandage pneumatique, dans une surface circonférentielle interne de la jante externe (13) ; et
chacun des éléments de connexion (15) est formé en symétrie axiale par rapport à une ligne imaginaire (L) passant à travers chacune desdites une sections d'extrémité (21a, 22a) et s'étendant dans la direction radiale du bandage pneumatique lorsque le bandage pneumatique (1) et vu dans une vue latérale du bandage pneumatique (1), dans la direction de la largeur du bandage pneumatique.
